# EUROPÄISCHE PATENTSCHRIFT

(11) **EP 1 647 534 B1**
(45) Veröffentlichungstag und Bekanntmachung des Hinweises auf die Patenterteilung: **19.12.2018**
(21) Anmeldenummer: 04405645.5
(22) Anmeldetag: 15.10.2004
(51) Int. Cl.: C03B 33/033, C03B 33/04, C03B 33/03

(54) **Vorrichtung und Verfahren zum Brechen von Glasscheiben**
Apparatus and process for braking open glass sheets
Dispositif et procédé pour ouvrir le trait de coupe de feuilles de verre

(43) Veröffentlichungstag der Anmeldung: 19.04.2006
(73) Patentinhaber: Bystronic Maschinen AG, 4922 Bützberg (CH)
(72) Erfinder: Schenk, Mark, 4600 Olten (CH); Manz, Bernhard, 3360 Herzogenbuchsee (CH)
(74) Vertreter: AMMANN PATENTANWÄLTE AG BERN

(56) Entgegenhaltungen:
- EP-A- 1 000 907
- EP-A- 1 367 027
- WO-A-2004/007164
- FR-A- 1 370 508
- US-A- 3 788 533
- US-A- 4 049 167
- US-A1- 2004 040 997
- US-A1- 2004 060 416
- PATENT ABSTRACTS OF JAPAN Bd. 1996, Nr. 07, 31. Juli 1996 (1996-07-31) -& JP 08 059269 A (ASAHI GLASS CO LTD), 5. März 1996 (1996-03-05)

## Beschreibung

Die Erfindung bezieht sich auf eine Vorrichtung zum Brechen von Glasscheiben gemäss Oberbegriff des Vorrichtungsanspruchs 1 und ein Verfahren gemäss Oberbegriff des unabhängigen Verfahrensanspruchs.

Eine Vorrichtung gemäss Oberbegriff des Anspruchs 1 ist aus der WO 2004/007164 A1 bekannt.

Zur Herstellung von Glasscheiben mit einer bestimmten Form, wie sie u.a. als Heck- oder Frontscheiben in Automobilen verwendet werden, werden die rohen Glasscheiben zuerst geritzt und dann gebrochen. Zum Brechen wird bekanntermassen eine Schablone verwendet, welche der gewünschten Scheibenform entspricht. Die geritzte Glasscheibe wird dabei auf die Schablone gelegt, und dann der frei stehende Rand der Glasscheibe mittels eines Brechrades oder einer Brechkugel weggedrückt (cf. z.B. die Patentschrift EP-A2-1 367 027 des gleichen Anmelders). Dies hat den Nachteil, dass für jede gewünschte Scheibenform eine separate Schablone hergestellt und gelagert werden muss. Dies macht die Herstellung von Glasscheiben mit einer beliebigen vorgegebenen Kontur aufwändig und teuer.

Ausgehend von diesem Stand der Technik liegt der vorliegenden Erfindung die Aufgabe zu Grunde, eine Vorrichtung sowie ein Verfahren anzugeben, welche bzw. welches die Herstellung von Glasscheiben mit einer beliebigen vorgegebenen Kontur vereinfacht.

Diese Aufgabe wird durch die erfindungsgemässe Vorrichtung gemäss Anspruch 1 sowie durch das erfindungsgemässe Verfahren gemäss dem unabhängigem Verfahrensanspruch gelöst. Die weiteren Ansprüche geben bevorzugte Ausführungen an.

Die Vorrichtung sowie das Verfahren gemäss der Erfindung haben u.a. den Vorteil, dass zum Brechen einer Glasscheibe keine Schablonen mehr erforderlich sind und somit die Herstellung von Glasscheiben beliebiger Kontur kostengünstiger und einfacher ist.

Die Erfindung wird im Folgenden anhand eines Ausführungsbeispiels unter Bezugnahme auf Figuren erläutert. Es zeigen:
Fig. 1 eine perspektivische Ansicht einer Anlage mit einer erfindungsgemässen Vorrichtung zum Brechen einer Glasscheibe;
Fig. 2 eine teilweise geschnittene Detail-Seitenansicht der erfindungsgemässen Vorrichtung gemäss Fig. 1;
Fig. 3 die Seitenansicht gemäss Fig. 2 beim Brechvorgang; und
Fig. 4 ein Beispiel einer geritzten Glasscheibe in einer Draufsicht.

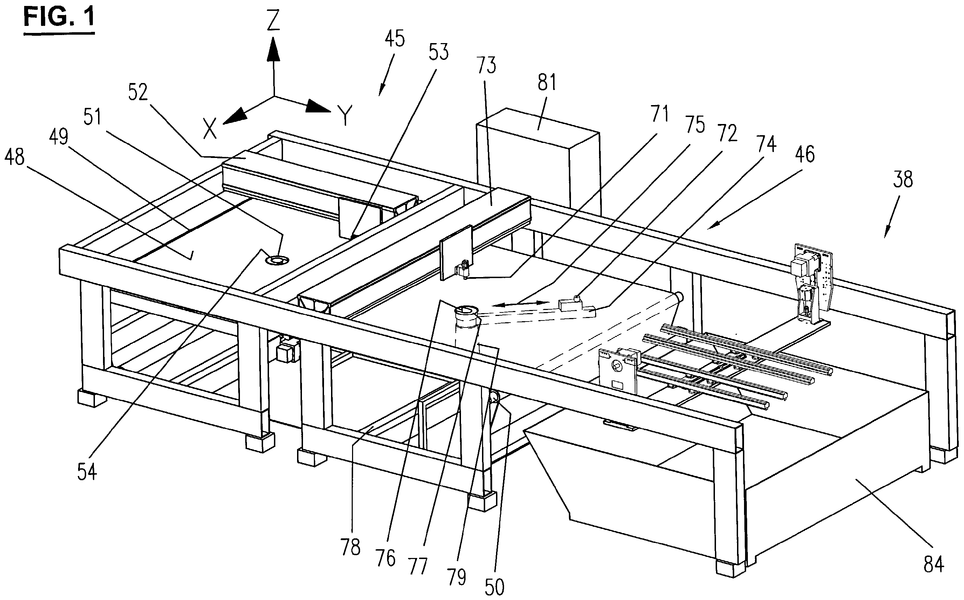

Die in Fig. 1 dargestellte Anlage umfasst eine Schneidstation 45 und eine Brechstation 46 sowie ein endloses Förderband 49, welches um Umlenkrollen 50 gelegt ist, von denen mindestens eine antreibbar ist. Das Förderband 49 dient einerseits als Auflagefläche 48 für die zu bearbeitende Glasscheibe. Andererseits ist die Oberseite des Förderbandes 49 in y-Richtung verfahrbar, um die Glasscheibe von der Schneidstation 45 zur Brechstation 46 und schliesslich die abgebrochenen Glasscherben von der Brechstation 46 zu einem anschliessenden Auffangbehälter 84 transportieren zu können.

Die Schneidstation 45 umfasst eine Schneidbrücke 52, welche oberhalb des Förderbandes 49 angeordnet ist. Die Schneidbrücke 52 ist entlang der x-Richtung verfahrbar und mit einem in y-Richtung sowie in vertikaler Richtung z verfahrbaren Schneidkopf 53 versehen, der ebenfalls drehbar ist. Die Bewegung der Schneidbrücke 52 und des Schneidkopfs 53 erfolgt durch eine Steuerung 81, welche es erlaubt, den Schneidkopf 53 präzise im Raum zu verfahren und um die vertikale Achse zu drehen und so eine Glasscheibe mit Ritzlinien beliebiger Form zu versehen. Die Schneidstation 45 umfasst weiter einen Sauger 54, welcher durch eine Öffnung 51 des Förderbandes 49 hindurchgeführt und an der Unterseite der Glasscheibe festgesaugt werden kann.

Die Brechstation 46 umfasst eine Brechvorrichtung mit einem ersten Brechkörper 71, der entlang der Vorderseite der Glasscheibe verfahrbar ist, und mit einem zweiten Brechkörper 72, der entlang der Rückseite der Glasscheibe verfahrbar ist. Der erste Brechkörper 71 ist verfahrbar in x-Richtung sowie in vertikaler Richtung z an einer Brücke 73 angebracht, welche in y-Richtung verfahrbar ist. Zwischen dem oberen, sich in die positive y-Richtung bewegenden Teil des Förderbandes 49 und seinem unteren, sich in die negative y-Richtung bewegenden Teil befindet sich ein Querbalken 78, an welchem eine vertikale Säule 79 mit einem Arm 74 befestigt ist. Dieser ist um die Säule 79 rotierbar, wobei der zweite Brechkörper 72 entlang dem Arm 74 verfahrbar angeordnet ist, wie dies durch den Doppelpfeil 75 in Fig. 1 angedeutet ist. Der zweite Brechkörper 72 kann somit in der xy-Ebene verfahren werden, indem er entlang des Arms 74 verschoben und/oder der Arm 74 selber rotiert wird.

Synchronisationsmittel, welche beispielsweise integriert in der Steuerung 81 sind, stehen mit der Brechvorrichtung in Wirkverbindung, um die beiden Brechkörper 71 und 72 synchronisiert zueinander in der xy-Ebene zu verfahren. Als Steuerung 81 zum gesteuerten Verfahren der Brechkörper 71 und 72 eignet sich z.B. eine CNC-Steuerung. Es wäre auch denkbar, wenn auch etwas aufwändiger, die Bewegung der beiden Brechkörper 71 und 72 über mechanische Synchronisationsmittel wie Zahnräder und/oder Gestänge zu synchronisieren.

Die Brechstation umfasst weiter Festhaltemittel 77 zum Festhalten der Glasscheibe während des Brechvorgangs. Bei der in Fig. 1 gezeigten Ausführungsform sind die Festhaltemittel 77 in Form eines Saugers in der Säule 79 integriert. Der Sauger 77 kann durch eine Öffnung 76 im Förderband 49 hindurchgeführt und an der Unterseite der geritzten Glasscheibe festgesaugt werden. Die Öffnung 76 kann auch weggelassen sein, da das Förderband 49 so verfahren werden kann, dass die Öffnung 51 oberhalb des Saugers 77 zu liegen kommt.

Im Weiteren ist es denkbar, als Festhaltemittel 77 mehrere Sauger vorzusehen, die auf der Glasscheibe anbringbar sind, und/oder das Förderband 49 gelocht auszubilden, um durch Erzeugen eines Unterdruckes die Glasscheibe anzusaugen und dadurch unverrückbar auf dem Förderband 49 festzuhalten.

Am Ende der Brechstation 46 ist eine in y-Richtung verfahrbare Transfervorrichtung 38 vorgesehen, mit welcher die herausgebrochene Glasscheibe übernommen und wegtransportiert werden kann. Beispielsweise wird diese zur weiteren Bearbeitung, wie Schleifen und/oder Bohren, einer anschliessenden Bearbeitungsstation oder zur Zwischenlagerung einem geeigneten Speicher übergeben.

Die Brechstation 46 mit der Brechvorrichtung 71, 72 braucht nicht anschliessend an die Schneidstation 45 angeordnet zu sein, sondern kann je nach Anwendungszweck freistehend oder mit anderen Stationen zur weiteren Bearbeitung der Glasscheibe verbunden sein.

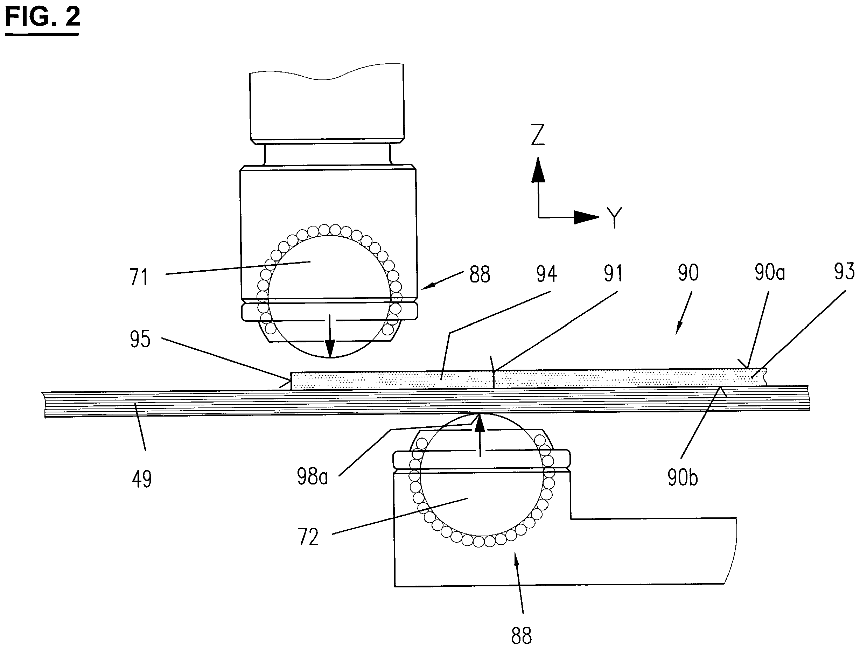

Fig. 2 zeigt eine Detail-Ansicht der Brechvorrichtung. Die beiden Brechkörper 71 und 72 sind kugelförmig ausgebildet und sind jeweils mittels geeigneter Lagerung 88, beispielsweise Kugellagerung, in alle Richtungen frei drehbar gelagert. Anstelle von Kugeln ist es auch denkbar den ersten Brechkörper 71 und/oder den zweiten Brechkörper 72 als Rolle auszubilden. Bei dieser Ausführungsform ist zusätzlich ein Antrieb vorzusehen, mittels welcher die Rolle um die vertikale Achse z drehbar ist, um jene beim Abrollen entlang der Glasoberfläche in Fahrrichtung ausrichten zu können.

Zwischen den beiden Brechkörpern 71 und 72 ist das Förderband angeordnet, welches eine Unterlage 49 für die Glasscheibe 90 bildet. Die Unterlage 49 ist aus einem flexiblen Material, dass so gewählt ist, dass sie einerseits ohne grösseres Durchhängen das Gewicht der Glasscheibe 90 zu tragen und andererseits bei Ausüben eines Druckes auf die Glasscheibenoberfläche nachzugeben vermag (cf. die nachfolgende Erläuterung zu den Fig. 2-4). Geeignete Materialien für die Unterlage 49 sind z.B. Kunststoff mit ausgewählter Elastizität oder ein Gewebeband, insbesondere ein Gewebeband aus Kunststofffasern.

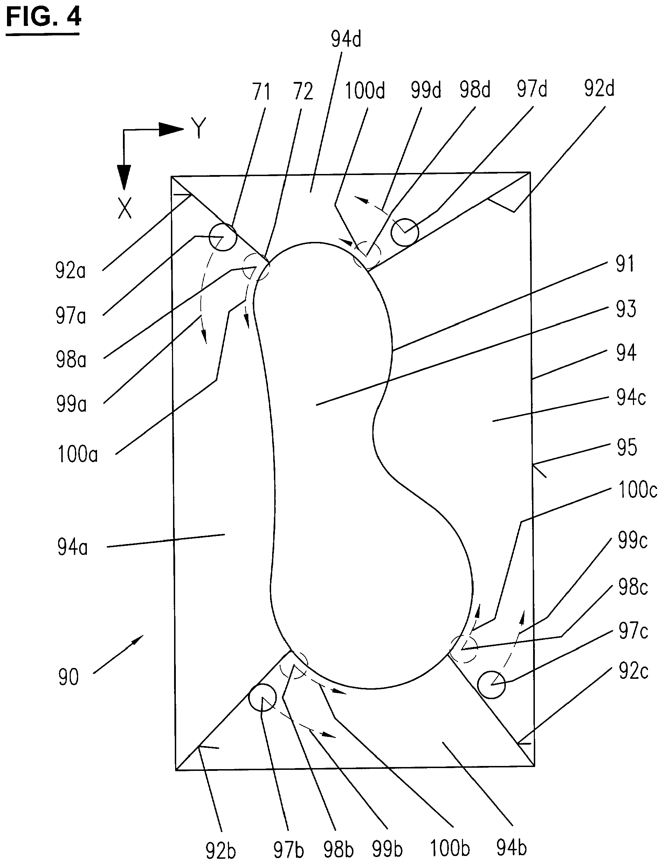

Zum Herstellen von Glasscheiben mit einer beliebigen vorgegebenen Kontur wird wie folgt vorgegangen:
Die rohe Glasscheibe wird auf das Förderband 49 gelegt und mit dem Sauger 54 festgehalten. Durch gesteuertes Verfahren des Schneidkopfs 53 wird die Glasscheibe gemäss Vorgabe geritzt. Fig. 4 zeigt ein Beispiel einer mit Ritzlinien 91 und 92a-92d versehenen Glasscheibe 90. Die Ritzlinie 91 gibt die gewünschte Kontur vor und trennt den inneren Nutzteil 93 der Glasscheibe 90 vom äusseren Randteil 94 (auch Borte genannt), welcher beim Brechvorgang entfernt wird.

Ritzlinien 92a-92d, welche jeweils von der Ritzlinie 91 zu der Glasscheibenkante 95 führt, sind Hilfsritzlinien, die dazu dienen, die Borte 94 in verschiedene Randteile 94a-94d zu unterteilen und so ein sauberes Herausbrechen zu erleichtern.

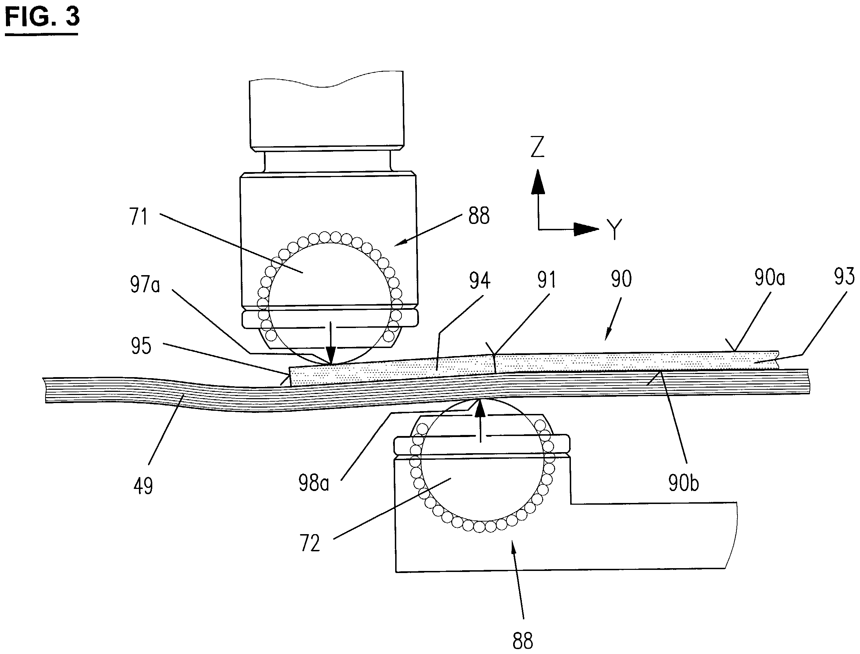

Die geritzte Glasscheibe 90 wird anschliessend mittels des Förderbandes 49 zur Brechstation 46 verfahren und dort durch die Festhaltemittel 77 festgehalten. Der zweite Brechkörper 72 wird auf die Unterseite der Unterlage 49 aufgesetzt, sodass, wie dies in Fig. 2 ersichtlich ist, der Auflagepunkt 98a des Brechkörpers 72 etwas seitlich versetzt von der Ritzlinie 91 auf der Borte 94 zu liegen kommt. Wie Fig. 3 zeigt, wird der erste Brechkörper 71 auf die Oberseite 90a der Glasscheibe 90 seitlich versetzt zum zweiten Brechkörper 72 und in der Nähe der Glasscheibenkante 95 aufgesetzt. Der Auflagepunkt 97a des ersten Brechkörpers 71 und der Auflagepunkt 98a des zweiten Brechkörpers 72 sind so gewählt, dass entlang der Ritzlinie 91 eine Biegespannung erzeugbar ist, welche den Bruch vorantreiben vermag. Es sei bemerkt, dass falls einer der Brechkörper rollenförmig ausgebildet ist, dieser nicht nur in einem Punkt, sondern entlang einer Linie auf der Unterlagenunterseite bzw. Glasscheibenoberfläche 90a aufliegt.

Nach dem Aufsetzen der Brechkörper 71 und 72 wird der erste Brechkörper 71 mit einer vorbestimmten Kraft oder einem vorbestimmten Hub gegen die Glasoberfläche 90a gepresst und gleichzeitig werden die beiden Brechkörper 71 und 72 mittels der Synchronisationsmittel entlang der Ritzlinie 91 verfahren. Wie dies in Fig. 4 durch die gestrichelten Linien 99a und 100a angedeutet ist, ist dabei der Verfahrweg der beiden Brechkörper 71 und 72 im Wesentlichen parallel zur Ritzlinie 91. Da die beiden Brechkörper 71 und 72 seitlich versetzt zueinander angeordnet sind, wird ein bestimmtes Moment auf den Rand 94 ausgeübt, welches den Bruch herbeiführt. Dabei gewährleistet die Nachgiebigkeit der Unterlage 49, auf welcher die Glasscheibe 90 mit ihrer Unterseite 90b aufliegt, dass der Rand 94 genügend nach unten gedrückt werden kann, um die Ritzlinie 91 zu öffnen. Andererseits stützt die Unterlage 49 die Glasscheibe 90 genügend, so dass insbesondere ein Abscheren der Borte 94a vermieden wird und ein sauberer Bruch entlang der Ritzlinie entsteht. Es hat sich gezeigt, dass schon bei einem relativ geringen Verfahrweg 99a, 100a der beiden Brechkörper 71 und 72 der Bruch sich bis zur nächsten Hilfsritzlinie 92b fortpflanzt.

Nach Abtrennen des ersten Randteils 94a werden nacheinander in analoger Weise durch Aufsetzen und Verfahren der Brechkörper 71 und 72 die restlichen Randteile 94b-94d abgebrochen. Im Beispiel gemäss Fig. 4 sind insgesamt vier Auftrennschritte erforderlich, wobei Auflagepunkte 97b, 98b und Verfahrweg 99b, 100b den zweiten Auftrennschritt, Auflagepunkt 97c, 98c und Verfahrweg 99c, 100c den dritten Auftrennschritt und Auflagepunkt 97d, 98d und Verfahrweg 99d, 100d den vierten Auftrennschritt andeuten.

Anschliessend wird der Nutzteil 93 der Glasscheibe 90 von der Transfervorrichtung 38 übernommen und abtransportiert. Die abgebrochenen Scherben 94a-94d bleiben dabei auf dem Förderband 49 liegen. Diese werden durch Verfahren des Förderbandes 49 in y-Richtung befördert, bis sie schliesslich in den Auffangbehälter 84 fallen.

Die Brechvorrichtung sowie das Verfahren gemäss der Erfindung haben u.a. folgende Vorteile:
- Für das Abbrechen des Glasscheibenrandes sind keine Schablonen mehr nötig. Somit können die Bearbeitungskosten zum Herstellen von Glasscheiben mit beliebiger Kontur erheblich gesenkt werden.
- Die Brechvorrichtung bzw. das Verfahren kann auf einfache und rasche Weise auf die jeweilige gewünschte Scheibenform angepasst werden, indem die Steuerung entsprechend programmiert wird. Ein Auswechseln von Komponenten wie Schablonen ist nicht erforderlich, sodass eine Serie von Glasscheiben mit verschiedenen Formen in kürzerer Zeit hergestellt werden kann.
- Da die beiden Brechkörper unabhängig voneinander positionierbar sind, kann das Glas besonders gezielt bzw. angepasst an die gewünschte Form deformiert und gebrochen werden.

Zur Reduktion der Bearbeitungszeit ist es denkbar, eine zweite Brechvorrichtung ähnlich der ersten Brechvorrichtung 71, 72 vorzusehen, um so gleichzeitig verschiedene Randteile der Glasscheibe abzubrechen. Im Beispiel gemäss Fig. 4 können bei dieser Ausführungsform in einem ersten Arbeitsschritt Randteil 94a von der ersten und Randteil 94c von der zweiten Brechvorrichtung und dann in einem zweiten Arbeitsschritt Randteil 94b von der ersten und Randteil 94d von der zweiten Brechvorrichtung abgetrennt werden. Die Bearbeitungszeit ist somit um die Hälfte reduziert.

## Patentansprüche

1. Vorrichtung zum Brechen einer Glasscheibe (90) an einer Brechstation,
mit mindestens einem ersten Brechkörper (71), der entlang der Vorderseite (90a) der Glasscheibe verfahrbar ist, und
mindestens einem zweiten Brechkörper (72), der entlang der Rückseite (90b) der Glasscheibe verfahrbar ist, **gekennzeichnet durch**
eine flexible Unterlage (49), welche zwischen den beiden Brechkörpern (71, 72) angeordnet und verfahrbar ist, um die Glasscheibe (90) von einer Schneidstation (45) zur Brechstation (46) zu transportieren.

2. Vorrichtung gemäss Anspruch 1, **dadurch gekennzeichnet, dass** der erste Brechkörper (71) kugel- oder rollenförmig ist und/oder der zweite Brechkörper (72) kugel- oder rollenförmig ist.

3. Vorrichtung gemäss einem der Ansprüche 1 bis 2, **gekennzeichnet durch** Synchronisationsmittel (81) zum synchronisierten Verfahren der beiden Brechkörper (71, 72).

4. Vorrichtung gemäss einem der Ansprüche 1 bis 3, **gekennzeichnet durch** mindestens einen rotierbaren Arm (74), entlang welchem einer der beiden Brechkörper (71, 72) verfahrbar aufgenommen ist.

5. Vorrichtung nach einem der Ansprüche 1 bis 4, **dadurch gekennzeichnet, dass** sie Festhaltemittel (77) zum Festhalten der Glasscheibe während des Brechens umfasst, wobei die Festhaltemittel vorzugsweise mindestens einen Sauger enthalten.

6. Verfahren zum Brechen einer Glasscheibe (90), bei welchem die Glasscheibe mittels einer flexiblen Unterlage (49), die zwischen mindestens einem ersten Brechkörper (71) und mindestens einem zweiten Brechkörper (72) angeordnet ist, von einer Schneidstation (45) zu einer Brechstation (46) transportiert wird und an der Brechstation gebrochen wird, indem der erste Brechkörper (71) entlang der Vorderseite (90a) der Glasscheibe und der zweite Brechkörper (72) entlang der Rückseite (90b) der Glasscheibe synchron verfahren werden.

7. Verfahren nach Anspruch 6, **dadurch gekennzeichnet, dass** der erste (71) und/oder zweite Brechkörper (72) mit einer vorbestimmten Kraft oder einem vorbestimmten Hub gegen die Glasscheibe (90) gepresst wird bzw. werden.

8. Verfahren nach einem der Ansprüche 6 bis 7, **dadurch gekennzeichnet, dass** die beiden Brechkörper (71, 72) seitlich versetzt zueinander und im Wesentlichen parallel zur Ritzlinie (91) verfahren werden, entlang welcher der Glasscheibe (90) gebrochen wird.

9. Verfahren nach einem der Ansprüche 6 bis 8, **dadurch gekennzeichnet, dass** die Glasscheibe (90) während des Brechvorgangs in derselben Position festgehalten wird.

## Claims

1. Device for breaking a glass pane (90) at a breaking station, comprising
at least one first breaking body (71) that is displaceable along the front side (90a) of the glass pane and
at least one second breaking body (72) that is displaceable along the back side (90b) of the glass pane, **characterized by**
a flexible support (49) that is arranged between the two breaking bodies (71, 72) and is displaceable for transporting the glass pane (90) from a cutting station (45) to the breaking station (46).

2. Device according to claim 1, **characterized in that** the first breaking body (71) has the shape of a ball or a roller and/or the second breaking body (72) has the shape of a ball or a roller.

3. Device according to one of claims 1 to 2, **characterized by** synchronizing means (81) for the synchronized displacement of the two breaking bodies (71, 72).

4. Device according to one of claims 1 to 3, **characterized by** at least one rotatable arm (74) along which one of the two breaking bodies (71, 72) is displaceable.

5. Device according to one of claims 1 to 4, **characterized in that** it comprises holding means (77) for holding the glass pane in place during the breaking operation, the holding means preferably comprising at least one suction device.

6. Method for breaking a glass pane (90), wherein the glass pane is transported from a cutting station (45) to a breaking station (46) by means of a flexible support (49) that is arranged between at least one first breaking body (71) and at least one second breaking body (72) and is broken at the breaking station (46) by displacing synchronously the first breaking body (71) along the front side (90a) of the glass pane and the second breaking body (72) along the back side (90b) of the glass pane.

7. Method according to claim 6, **characterized in that** the first (71) and/or the second breaking body (72) is/are pressed against the glass pane (90) with a predetermined force or a predetermined stroke.

8. Method according to one of claims 6 to 7, **characterized in that** the two breaking bodies (71, 72) are displaced laterally offset relative to one another and essentially parallel to the scribing line (91) along which the glass pane (90) is broken.

9. Method according to one of claims 6 to 8, **characterized in that** the glass pane (90) is maintained in the same position during the breaking procedure.

## Revendications

1. Dispositif de rompage permettant de rompre une plaque de verre (90) dans une station de rompage,
comprenant au moins un premier corps de rompage (71) qui est déplaçable le long de la face avant (90a) de la plaque de verre, et
au moins un deuxième corps de rompage (72) qui est déplaçable le long de la face arrière (90b) de la plaque de verre,
**caractérisé par**
un support flexible (49) agencé entre les deux corps de rompage (71, 72) et déplaçable afin de transporter la plaque de verre (90) d'une station de découpe (45) vers la station de rompage (46).

2. Dispositif selon la revendication 1, **caractérisé en ce que** le premier corps de rompage (71) est sphérique ou cylindrique et/ou le deuxième corps de rompage (72) est sphérique ou cylindrique.

3. Dispositif selon l'une des revendications 1 à 2, **caractérisé par** des moyens de synchronisation (81) permettant le déplacement synchronisé des deux corps de rompage (71, 72).

4. Dispositif selon l'une des revendications 1 à 3, **caractérisé par** au moins un bras rotatif (74) le long duquel l'un des deux corps de rompage (71, 72) est reçu de manière déplaçable.

5. Dispositif selon l'une des revendications 1 à 4, **caractérisé en ce qu'**il comprend des moyens de retenue (77) afin de retenir la plaque de verre pendant le rompage, les moyens de retenue comprenant préférablement au moins une ventouse.

6. Procédé de rompage d'une plaque de verre (90) où la plaque de verre est transportée, au moyen d'un support flexible (49) agencé entre au moins un premier corps de rompage (71) et au moins un deuxième corps de rompage (72), d'une station de découpe (45) vers une station de rompage (46) et est rompue dans la station de rompage en ce que le premier corps de rompage (71) est déplacé le long de la face avant (90a) de la plaque de verre et le deuxième corps de rompage (72) est synchroniquement déplacé le long de la face arrière (90b) de la plaque de verre.

7. Procédé selon la revendication 6, **caractérisé en ce que** le premier (71) et/ou le deuxième corps de rompage (72) est/sont pressé(s) contre la plaque de verre (90) avec une force définie ou une course définie.

8. Procédé selon l'une des revendications 6 à 7, **caractérisé en ce que** les deux corps de rompage (71, 72) sont déplacés latéralement décalés l'un de l'autre et substantiellement parallèlement à la ligne de rayure (91) le long de laquelle la plaque de verre (90) est rompue.

9. Procédé selon l'une des revendications 6 à 8, **caractérisé en ce que** la plaque de verre (90) est maintenue dans une même position pendant la procédure de rompage.
